# EUROPEAN PATENT APPLICATION

(11) **EP 2 071 646 A1**
(43) Date of publication of application: **17.06.2009**
(21) Application number: 06791149.5
(22) Date of filing: 29.09.2006
(51) Int. Cl.: H01M 2/02, B23K 26/00

(54) **BATTERY CORE CASE AND BATTERY**

(71) Applicant: Shenzhen Bak Battery Co., Ltd, Longgang District Shenzhen Guangdong 518119 (CN)
(72) Inventor: WANG, Chunguang, Guangdong 518119 (CN); CHEN, Baotong, Guangdong 518119 (CN); REN, Can, Guangdong 518119 (CN)
(74) Representative: Brand, Thomas Louis
(86) International application number: PCT/CN2006/002562
(87) International publication number: WO 2008/037120

(57) **Abstract**

A battery cell case comprises a cylindrical body (1), a top cover plate (3) and a bottom cover plate (4). The cylindrical body (1) comprises a top which is open and covered with the top cover plate (3) fixed thereto. The cylindrical body (1) further comprises a bottom configured to be a supporting surface having an opening (2), and the opening (2) of the supporting surface is configured to be covered with the bottom cover plate (4). Further, the opening (2) is configured to be a stepped opening or a conical bulge. Furthermore, a first bulge (12) is arranged on an exterior surface of the bottom surrounding the opening (2). A second bulge (13) is arranged on an exterior surface of the bottom cover plate next to the opening of the bottom. In addition, a battery cell formed from the battery cell case is also provided.

## Description

### FIELD OF THE INTENTION

The present invention relates to a battery cell case and a battery cell, especially to a battery cell case and a battery cell suitable for a lithium ion battery.

### BACKGROUND THE INVENTION

A lithium ion battery is of large capacity, high power, and mainly applied to a small device, particularly a mobile phone, laptop and portable electric tool. A lithium ion battery generally consists of a battery plate, a battery can, an electrolyte and a battery unit, wherein the battery unit can be formed by winding a positive plate, a cathode plate and a separator. The lithium ion battery, in the prior art, is generally packaged by the following steps: putting the winded battery unit into the battery can; then welding a connection belt between the positive plate and negative plate to the battery plate; then sealing the battery plate to an opening of the battery can by means of a laser welding process, and thereby forming a case containing the winded battery unit. In order to improve the welding process of lugs, an assembly process is well known in the art wherein a cylindrical case with openings both at its top and bottom is welded to the two cover plates, that is, terminals of a prepared battery unit is firstly electrically connected to the cover plates, and then the top cover plate and bottom cover plate are welded to the cylindrical body. Such an assembly process can solve the technical problem of welding the terminals to the battery case, while resulting in the following problems. For example, during the assembly process, since the battery case has openings both at its top and bottom without any plate thereon, the battery unit, after disposed inside the battery case, tends to slide therein, and it is therefore hard to control the position of the battery unit therein. This causes difficulties to the assembly process, and even to the subsequent welding process of the battery plate.

### SUMMARY OF THE INTENTION

It is an object of the invention to provide a battery cell case and a battery cell to facilitate assembling and positioning the battery cell, and to prevent the battery cell from sliding in the case.

It is another object of the invention to provide a battery cell case and a battery cell which can improve the welding quality of cover plates and lower the leakage rate of the battery.

The above objects can be achieved by the following technical solutions.

A battery cell case comprises a cylindrical body, a top cover plate and a bottom cover plate. The cylindrical body comprises a top which is open and covered with the top cover plate fixed thereto. The cylindrical body further comprises a bottom configured to be a supporting surface having an opening configured to be covered with the bottom cover plate.

A battery cell case comprises a cylindrical body, a battery unit, a top cover plate and a bottom cover plate. The cylindrical body comprises a top which is open and covered with the top cover plate fixed thereto. The cylindrical body further comprises a bottom configured to be a supporting surface having an opening, the battery cell is supported by the supporting surface, and the opening of the supporting surface is configured to be covered with the bottom cover plate.

Further, a first bulge is arranged on an exterior surface of the bottom surrounding the opening, and a second bulge is arranged on an exterior surface of the bottom cover plate next to the opening of the bottom.

Further, the first bulge is configured to be a continuous or discontinuous annular bulge surrounding the opening, and the second bulge is configured to be a continuous or discontinuous annular bulge.

Further, the bottom cover plate is formed with an anti-explosion groove.

Further, the first and second bulges have a width one to three times the thickness of a wall of the cylindrical body and each has a height one to three times the thickness of a wall of the bottom.

Further, a first bulge is arranged on the exterior surface of the bottom surrounding the opening, a second bulge is arranged on the exterior surface of the bottom cover plate next to the opening of the bottom, and an annular groove is formed between the first bulge and the second bulge.

The following advantageous effects can be achieved by implementing the present invention.

1. Since the cylindrical body comprises a bottom configured to be a supporting surface having an opening, and the battery cell can be supported by the supporting surface, it avoids the battery unit from sliding in the cylindrical body during the assembly process and facilitates to position the same therein.

2. Since the strength of a cylindrical body with a bottom is greater than that of a cylindrical body without a bottom, the cylindrical body will not be deformed during the assembly process, and thus a subsequent shape rectification process is unnecessary.

3. The provision of the first bulge on the bottom and/or the provision of the second bulge on the bottom cover plate can achieve a deeper welding penetration thus lowering welding deficiency. As such the battery leakage rate is reduced and the thickness of the bottom would not need to be too large, which in turn reduces the cost. Moreover, the bulges can facilitate the guiding function of the ultrasonic welding torch so as to reduce the possibility that the welding torch deviates from the welding region.

4. Since the first bulge is arranged on the bottom and the second bulge is arranged on the bottom cover plate, a relatively depressed, narrow annular groove can be formed in the welding zone between the first and second bulges. The forming of the annular groove can provide the following advantages that: (1) heat loss occurring in the welding region can be effectively prevented, and especially the heat loss caused by air flow can be reduced significantly, so as to achieve a deeper welding penetration at a given laser intensity thereby significantly lowering welding deficiency, and the leakage rate of the battery can be further lowered; and (2) the narrow annular groove can serve, during the welding process, as a guiding groove to prevent the welding torch from departing from the welding zone.

5. The bulge is designed to have a width one to three times the thickness of the wall of the cylindrical body, so that such problems can be solved, as difficult manufacturing process due to the too small width of the bulge (less than one times the thickness of the wall), and heat loss due to the too large width of the bulge (more than three times the thickness of the wall).

6. The bulge is designed to have a height one to three times the thickness of the wall of the cylindrical body, so that such problems can be solved, as the increased height of the battery caused by a higher bulge (more than three times the thickness of the wall), and the heat loss due to the too small height (less than one times the thickness of the wall).

7. The bottom cover plate is formed with an anti-explosion groove such that the pressure can be released promptly and the explosion of the battery can be prevented.

### DESCRIPTION OF THE DRAWINGS

Fig. 1 is a schematic view of a cylindrical battery.

Fig. 2 is a schematic view of the battery cell case in Fig. 1.

Fig. 3 is a schematic view of the bottom cover plate in Fig. 1.

Fig. 4 is a section view taken along line A-A in Fig. 3.

Fig. 5 is a schematic view of another battery cell case.

Fig. 6 is a schematic view of still another battery cell case.

Fig. 7 is an enlarged view of the portion A in Fig. 6 with the bottom cover plate being removed.

Fig. 8 is a schematic view of another battery cell case.

Fig. 9 is an enlarged view of the portion B in Fig. 8 with the bottom cover plate being removed.

Fig. 10 is a bottom schematic view of the bottom cover plate in Fig. 8.

Fig. 11 is a schematic view of another battery cell case.

Fig. 12 is an enlarged view of the portion B in Fig. 11 with the bottom cover plate being removed.

Fig. 13 is a bottom schematic view of the bottom cover plate in Fig. 11.

### DESCRIPTION OF THE EMBODIMENTS

Hereinafter, the present invention is illustrated in detail based on embodiments in connection with the accompanying drawings:

### Embodiment 1

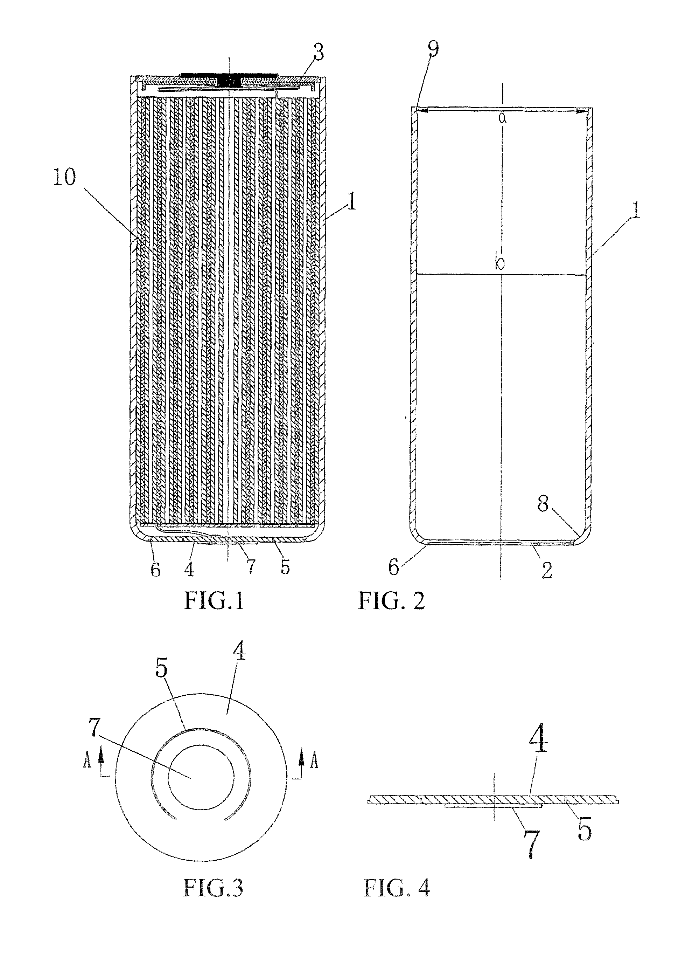

With reference to Figs. 1 to 4, a battery cell comprises a cylindrical body 1, a battery unit 10, a top cover plate 3 and a bottom cover plate 4. A top of the cylindrical body 1 is open and is formed with a step 9 so as to be engaged with the top cover plate 3. A bottom of the cylindrical body 1 is formed as a supporting surface 8 having a stepped opening 2 for supporting the battery cell 10. The bottom cover plate 4 may be provided with a step 6 along a periphery thereof so as to match the stepped opening 2. The bottom cover plate 4 also may be formed with a groove 5 for promptly releasing pressure so as to prevent the battery from exploding. The bottom cover plate 4 may be seal-welded to the stepped opening 2 of the supporting surface 8. Furthermore, an exterior surface of the bottom cover plate 4 may be coated with a layer of nickel 7 to facilitate welding a conductor thereon. The layer of nickel 7 may be replaced with a Nickel/Aluminum cladding strip. During a manufacturing process, the battery unit 10 may be disposed inside the cylindrical body 1 made of Aluminum, and then supported by the supporting surface 8. The battery unit may be provided with a positive terminal and a negative terminal. After the positive/negative terminals are electrically connected to the top cover plate 3 and the bottom cover plate 4, respectively, the battery unit may be sealed into the cylindrical body by welding the top cover plate 3 and bottom cover plate 4 thereto.

Since the bottom of the cylindrical body is formed with the supporting surface and the opening, such problems that the battery unit may slide in the cylindrical body I during the assembly process and it is hard to position the battery unit therein can be solved. Moreover, since the strength of a cylindrical body with a bottom is greater than that of a cylindrical body without the bottom, the cylindrical body would not deform during an assembly process, thus a subsequent shape rectification process is unnecessary. In addition, the groove provided on the bottom cover plate is able to release the pressure promptly and thus prevent the battery from exploding. The stepped shapes of the peripheries of the opening and bottom cover plate may facilitate the assembly process and result in an accurate positioning of the battery unit. Also, since the peripheries of the top of the cylindrical body and the top cover plate are provided with the stepped configurations, and the internal diameter at the opening of the cylindrical body is greater than that of the cylindrical body, it is easy to weld the top cover plate to the cylindrical body and to achieve an accurate positioning therebetween. The top and bottom cover plates are engaged with the cylindrical body in the above-mentioned manner, so that the battery may be sealed by a standing welding. The structure of clamps used in the standing welding are simple and the welding quality is high. Due to the configuration of the cylindrical body with the opening at the bottom, an ultrasonic welding can be applied on lugs before the cover plates are placed, which may greatly facilitate the application of the ultrasonic welding of the lugs while improving the stability of the ultrasonic welding.

The manufacturing process af said battery cell case is as follows: the cylindrical body made of aluminum may be formed by a punching process. The punching process the following steps: (1) cutting a substrate into a disc; (2) drawing the disc into a cylindrical body having a bottom and a required shape; (3) punching the bottom of the cylindrical body to form a through hole; and (4) punching the periphery of the through hole to form a step. The steps of cutting and drawing are conventional processes. The step on the bottom is formed by punching the bottom of the cylindrical body to form a hole, followed by punching the bottom to form the step, and then trimming the punched stepped hole to achieve a predetermined shape.

### Embodiment 2

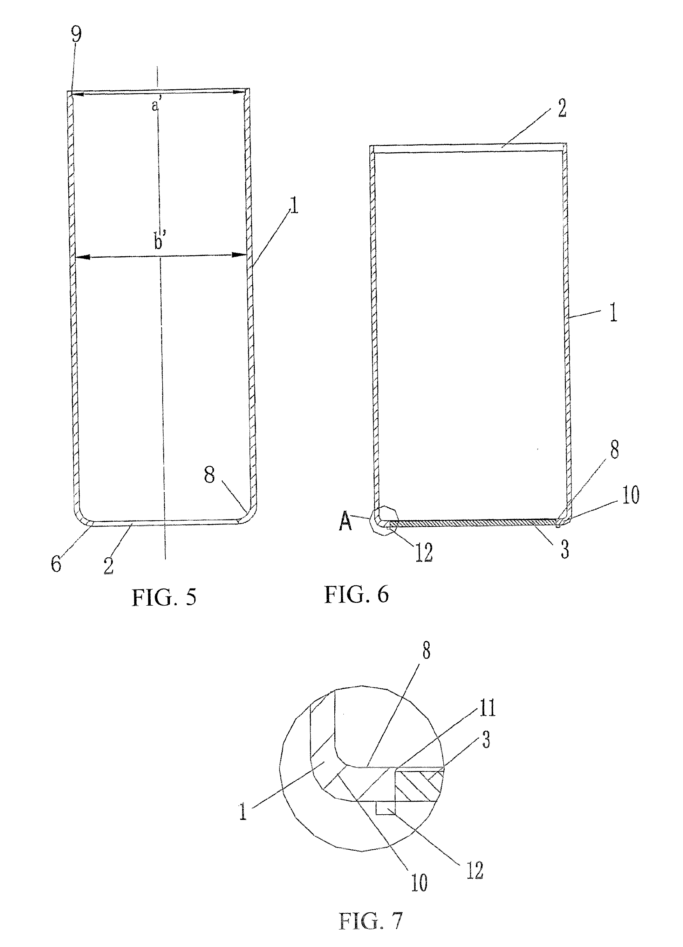

Another embodiment of the battery cell case is shown in Fig. 5, in which a cylindrical body 1 may be provided with a supporting surface 8 having a conical opening 2, and a bottom cover plate 4 may be accordingly provided with a conical surface 6 at the periphery thereof (not shown) to match the conical opening 2.

### Embodiment 3

Yet another embodiment of a battery cell case is shown in Figs.6 and 7. The battery cell case comprises a cylindrical body 1, a top cover plate 3 and a bottom cover plate 4. The cylindrical body 1 may be provided with an opening at a top thereof. The top of the cylindrical body 1 is covered with the top cover plate 3. A bottom 10 of the cylindrical body 1 may have a supporting surface 8, a through hole 2 and a first bulge 12 formed along the periphery of the through hole 2 on an exterior surface of the bottom 10. The first bulge 12 may be configured to be a continuous annular bulge. The through hole 2 may have a conical surface 11 such that the opening of the through hole 2 may be substantially conical. The periphery of the bottom cover plate 4 may be shaped to match the through hole 2, and the bottom cover plate 4 may be seal-welded to the through hole 2 of the bottom 10.

The provision of the first bulge has the following advantages: (1) making the welding process easier and achieving a deeper welding penetration and thus a lower welding deficiency so that the battery leakage rate is reduced and the thickness of the bottom would not too large so as to reduce the cost; and (2) to facilitate the guiding function of the ultrasonic welding torch so as to reduce the possibility that the welding torch deviates from the welding region.

In this embodiment, the wall of the battery cell case may have a thickness of 0.3mm, and the bottom may have a thickness of 0.8mm, and the bulge in the embodiment may have a height of 0.3mm and a width of 0.9mm.

### Embodiment 4

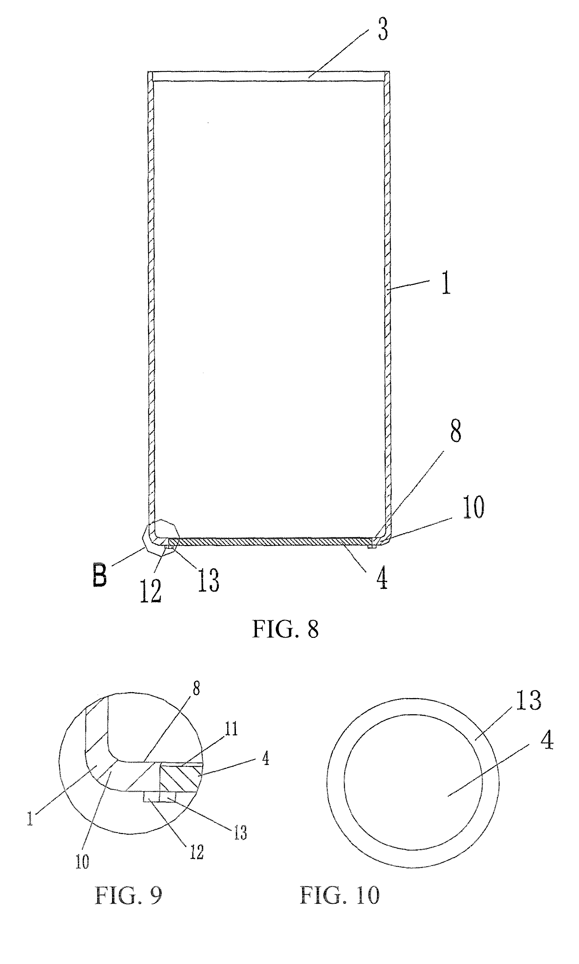

Still another embodiment of the battery cell case is shown in Figs. 8, 9 and 10. The configuration of the battery cell case in this embodiment is as the same as those of the embodiment 3, except that a second bulge 13 may be formed at the periphery of the bottom cover plate 4, the wall of the battery cell may have a thickness of 0.3mm, the bottom cover plate may have a thickness of 0.8mm, and the bulge in the embodiment may have a height of 0.6mm and a width of 0.6mm.

The provisions of the first and second bulges has the following advantages: (1) making the welding process easier and achieving a deeper welding penetration and thus a lower welding deficiency so as to reduce the battery leakage rate; (2) with the welding quality being ensured, partially providing the second bulge on the bottom cover plate so that the thickness of the bottom of the cylindrical body would not too large, and thus the cost is reduced.

### Embodiment 5

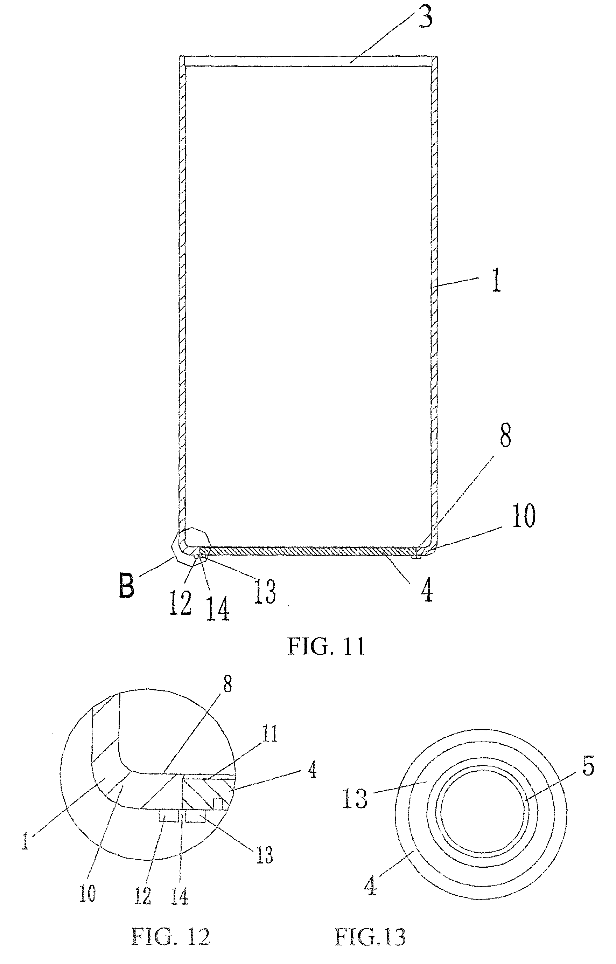

Still another embodiment of battery cell case is shown in Figs. 11, 12 and 13. The battery cell case comprises a cylindrical body 1, a top cover plate 3 and a bottom cover plate 4. The cylindrical body I may be provided with an opening at a top thereof. The top of the cylindrical body 1 is covered with the top cover plate 3. A bottom 10 of the cylindrical body I may have a supporting surface 8, a through hole 2 and a first bulge 12 provided along the periphery of the through hole 2 on an exterior surface of the bottom 10. The first bulge 12 may be a continuous annular bulge. A second bulge 13 may be provided on the bottom cover plate 4 next to the opening 2 of the bottom 10. Thus, a relatively depressed, narrow annular groove 14 is formed in the welding zone between the first bulge 12 and the second bulge 13. The bottom cover plate 4 is formed with an anti-explosion groove 5 to release pressure promptly and thus prevent the battery from exploding.

The forming of the annular groove 14 can provide the following advantages: (1) heat loss occurring in the welding region can be effectively prevented, and especially the heat loss caused by air flow can be reduced significantly, so as to achieve a deeper welding penetration at a given laser intensity and thus a significantly lowered welding deficiency, whereby the leakage rate of the battery can be further lowered; and (2) the narrow annular groove may serve, during the welding process, as a guiding groove to prevent the welding torch from departing from the welding zone.

### Comparison Experiment

Forty thousand of batteries are manufactured in the same manufacturing process, ten thousand of which are manufactured according to the embodiments 1, 3, 4 and 5, respectively. All the batteries are tested after being reserved for one month, and the statistical test results are as follows:

**Table 1. Leakage Rate for Batteries with Various Case Configurations**

| Configurations | Embodiment 1 | Embodiment 3 | Embodiment 4 | Embodiment 5 |
|---|---|---|---|---|
| Leakage Rates | 15% | 1.4% | 0.4% | 0.7% |

From the Table 1, it is apparent that, since the first bulge is provided on the bottom of the battery cell case or the second bulge is provided on the bottom cover plate, a welding penetration at a given laser intensity is deeper and the welding deficiency is significantly lowered so that the leakage rate of the batteries is lowered noticeably.

It should be noted that, the present invention is illustrated by way of preferred embodiments, which are only visual examples for helping understanding, and should not be construed as limitation thereto. Similarly, according to the description on the invention and the preferred examples, various possible equivalent modifications or substitutions can be made, which should be comprised within the scope of the invention. For example, the first and second bulges can also be configured to be of discontinuous annular bulges instead of continuous annular bulges. In this case, the broken portion of the annular bulge can reinforce the strength. Further, the first and second bulges can also be filled with thermal-insulation materials so as to effectively prevent the heat loss in the welding region during the process of laser welding to achieve a deeper welding penetration at a given laser intensity. Thus, the leakage rate can be further lowered.

## Claims

1. A battery cell case, comprising a cylindrical body, a top cover plate and a bottom cover plate, wherein the cylindrical body comprises a top which is open and covered with the top cover plate fixed thereto, and wherein the cylindrical body further comprises a bottom configured to be a supporting surface having an opening, and the opening of the supporting surface is configured to be covered with the bottom cover plate.

2. The battery cell case according to claim 1, wherein a first bulge is arranged on an exterior surface of the bottom surrounding the opening.

3. The battery cell case according to claim 2, wherein the first bulge is configured to be a continuous annular bulge surrounding the opening.

4. The battery cell case according to claim 2, wherein the first bulge is configured to be a discontinuous annular bulge surrounding the opening.

5. The battery cell case according to one of claims 1 to 4, wherein a second bulge is arranged on an exterior surface of the bottom cover plate next to the opening of the bottom.

6. The battery cell case according to claim 5, wherein the second bulge is configured to be a continuous annular bulge.

7. The battery cell case according to claim 5, wherein the second bulge is configured to be a discontinuous annular bulge.

8. The battery cell case according to claim 6, wherein the first and second bulges each has a width one to three times the thickness of a wall of the cylindrical body and each has a height one to three times the thickness of a wall of the bottom.

9. The battery cell case according to clam 1, wherein a first bulge is arranged on an exterior surface of the bottom surrounding the opening, a second bulge is arranged on an exterior surface of the bottom cover plate next to the opening of the bottom, and an annular groove is formed between the first bulge and the second bulge.

10. The battery cell case according to claim 9, wherein the bottom cover plate is formed with an anti-explosion groove.

11. A battery cell case, comprising a cylindrical body, a battery unit, a top cover plate and a bottom cover plate, wherein the cylindrical body comprises a top which is open and covered with the top cover plate fixed thereto, wherein, the cylindrical body further comprises a bottom configured to be a supporting surface having an opening, the battery cell is supported by the supporting surface, and the opening of the supporting surface is configured to be covered with the bottom cover plate.

12. The battery cell according to claim 11, wherein a first bulge is arranged on an exterior surface of the bottom surrounding the opening.

13. The battery cell according to claim 12, wherein the first bulge is configured to be a continuous annular bulge surrounding the opening.

14. The battery cell according to claim 12, wherein the first bulge is configured to be a discontinuous annular bulge surrounding the opening.

15. The battery cell case according to one of claims 11 to 14, wherein a second bulge is arranged on an exterior surface of the bottom cover plate next to the opening of the bottom.

16. The battery cell according to claim 15, wherein the second bulge is configured to be a continuous annular bulge.

17. The battery cell according to claim 15, wherein the second bulge is configured to be a discontinuous annular bulge.

18. The battery cell according to claim 16, wherein the first and second bulges each has a width one to three times the thickness of a wall of the cylindrical body and each has a height one to three times the thickness of a wall of the bottom.

19. The battery cell according to claim 11, wherein a first bulge is arranged on an exterior surface of the bottom surrounding the opening, a second bulge is arranged on an exterior surface of the bottom cover plate next to the opening of the bottom, and an annular groove is formed between the first bulge and the second bulge.

20. The battery cell according to claim 19, wherein the bottom cover plate is formed with an anti-explosion groove.
